# EUROPEAN PATENT APPLICATION

(11) **EP 2 693 330 A1**
(43) Date of publication of application: **05.02.2014**
(21) Application number: 12305969.3
(22) Date of filing: 03.08.2012
(51) Int. Cl.: G06F 3/14, G09B 5/08, G06F 3/03

(54) **A method, a server and a pointing device for enhancing presentations**

(71) Applicant: Alcatel Lucent, 75007 Paris (FR)
(72) Inventor: Nouri, Marwin, 91400 Saclay (FR); Delegue, Gérard, 94230 Cachan (FR)
(74) Representative: Kleinbub, Oliver

(57) **Abstract**

The invention concerns a method for making a presentation comprising,
- sending (202) an image of the presentation to be displayed on a screen (101), in particular to a display device (100) and via a network device (108),
- while the image is displayed, receiving (203, 204) from a pointing device (110) information about the alignment of the pointing device (110) relative to the screen (101),
- determining (205, 206, 212) a predetermined action to be performed depending on the information received, and
- sending (208) the result of the predetermined action, in particular to the display device (100) and via the network device (108).

## Description

### Field of the invention

The invention relates to a method, a server and a pointing device for enhancing presentations.

### Background

Laser pointers are used during presentations to audience that is in the same room as the presenter. Laser pointers show, for example, a red point to indicate an area that the presenter wants to highlight in a presentation slide currently shown.

In multilocation presentations the laser pointer can only be seen at location where the presenter is presenting the presentation. All other locations referred to as remote locations, will not be able to see the highlighted area that the presenter is pointing the laser pointer at.

Furthermore camera based pointing interfaces have been developed to provide a pointing system based on a camera detecting the hand of a user. However, such systems are highly sensitive to luminance conditions and do not allow to interact dynamically with the displayed content of the slide.

Wireless computer mice may be used to move the mouse pointer in a presentation. However, operating a computer mouse during a presentation is cumbersome to use and slow.

### Summary

The object of the invention is thus to provide an improved multilocation presentation system.

The main idea of the invention is, for making a presentation, to send an image of the presentation to be displayed on a screen, in particular to a display device and via a network device, while the image is displayed to receive from a pointing device information about the alignment of the pointing device relative to the screen, to determine a pre-determined action to be performed depending on the information received, and to send the result of the pre-determined action, in particular to the display device and via the network device. This way the pre-determined action is determined without constrain to the presenter and the result of the pre-determined action is provided to local audience watching the presentation of a screen as well as to remote clients watching the presentation via the network.

Advantageously a position on the image the pointing device is pointing at is determined from the alignment of the pointing device. This provides the possibility to easily determine the position on the currently presented image that shall be used.

Advantageously the alignment is determined from a horizontal orientation angle and a vertical orientation angle of the pointing device relative to a pre-determined horizontal orientation and a predetermined vertical orientation. This provides a simple method of determining the alignment.

Advantageously the pre-determined horizontal orientation and the predetermined vertical orientation is a maximum horizontal angle and maximum vertical angle that correspond to the angle between the horizontal and vertical extremities of the screen from the position of the pointing device respectively. This further simplifies the calculation of the alignment of the pointing device regarding the screen.

Advantageously, the maximum horizontal angle and the maximum vertical angle are determined from information received from the pointing device while a calibration image is displayed on the screen. This simplifies the use and improves the performance of the presentation system.

Advantageously the pre-determined action is to determine a new image. The new image comprises a symbol representing the pointer displayed at the position the pointing device is pointing at on the displayed image, a highlighted area determined depending on the position the pointing device is pointing at on the displayed image or is a new image which is determined as at least as a part of the original image resized. This way, actions of the area that the pointing device is pointing at are easily integrated into the presentation.

Further developments of the invention can be gathered from dependent claims and the following description.

### Brief description of the figures

In the following the invention will be explained further, making reference to the attached drawings.
Figure 1 schematically shows a system for making a presentation.
Figure 2 schematically shows a flowchart for a method for making a presentation.

### Description of the embodiments

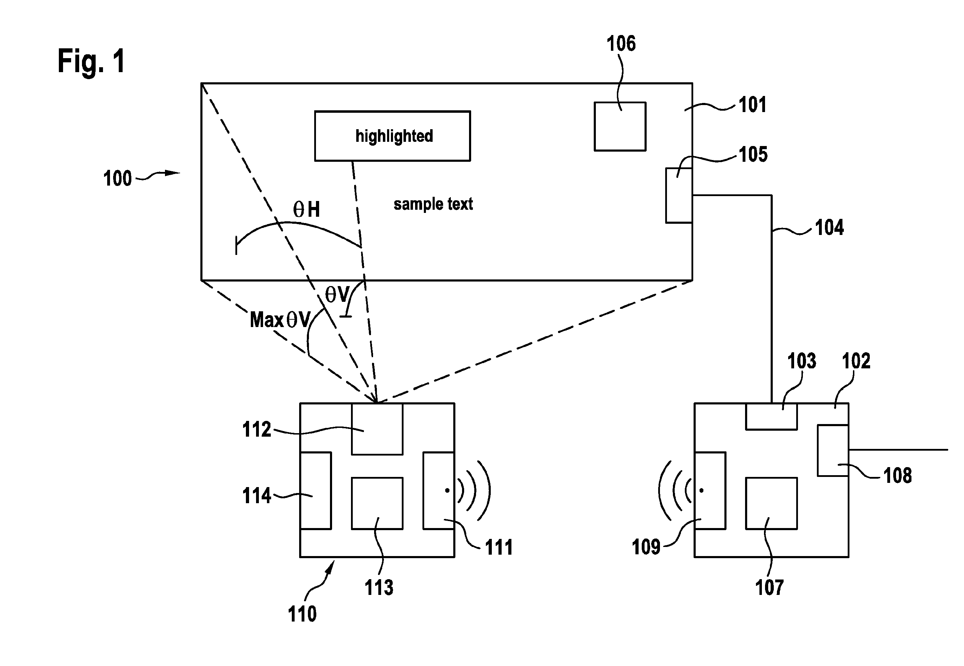

Figure 1 depicts a pointing system which is adaptable to digitalizing the pointer and making it available at the same time for remote audience, local audience and for recorded viewing.

The system, for example, analyses content of an image, e.g. of a presentation slide, and combines the image with the digitalized pointer to perform pre-determined actions such as highlighting or enhancing a area the pointer is currently pointing at on the presentation slide, displaying a video or resizing part of an image currently displayed.

The system comprises a display device 100 with a screen 101, a server 102 and a pointing device 110.

The server 102 comprises a data output 103 connectable to a data input 105 of the display 100. As depicted in figure 1 the data output 103 and the data input 105 are connectable via a data link 104. The data exchange via the data link 104 is, for example, according to the video graphics of array system, well known as VGA or the high definition multimedia interface, well known as HDMI. For example, individual images are exchanged via the data link 104.

Alternatively to using the display device 100 with the screen 101, a projector may be used to screen the images. In any case, the size of the screen 101 is determined by a height v and a length h.

The display device 100 comprises a processor 106 operable to control the screen 101 to display an image received at the data input 105.

The server 102 comprises a processor 107 operable to determine the image to be sent to the display device 100.

Accordingly the processor 106, the processor 107, the data output 103 and the data input 105 act together to transmit data in particular images via the data link 104.

The server 102 comprises a network device 108 operable to transmit the same image that is transmitted via the output device 103 to any connected clients. The image may be transmitted via the network device 108 according to any suitable format for transmitting data, for example, using the well known MPEG4 format. Any other format for transmitting images may be used instead. In particular the images may be transformed into any suitable format before the output.

Furthermore, the server 102 comprises an input device 109 connectable to the pointing device 110 via an output device 111 of the pointing device 110. The input device 109 and the output device 111 act together to transmit data between the pointing device 110 and the server 102 via a wireless data link. For example, the data transfer is performed using the IEEE 802.11n standard. Any other type of data link, for example, a wired data link may be used. Infrared data links or Bluetooth data links may be used as well.

The pointing device 110 comprises a sensor 112 operable to sense information about the orientation of the sensor in the space. For example, the sensor 112 is an absolute position transducer or an orientation sensor.

The server 102 furthermore comprises a processor 113 operable to determine the position and orientation of the pointing device 110 and send it to the server 102. To that end, the processor 113 is adapted to determine from the data sensed by the sensor 112 the position and orientation of the pointing device 110.

Furthermore, the pointing device 110 comprises a user interface, for example a button 114 that can be pressed by a user holding the pointing device 110. The button 114, for example, has two states, pressed and not pressed. Furthermore, the processor 113 is adapted to determine the state of the button 114, in particular whether it is pressed or not pressed and to send the information to the server 102 via the output device 111.

The server 102, the pointing device 110 and the display device 100 act together to display an image determined by the server 102 from input received from the pointing device 110 and display the image together with information about the pointing device on the screen 101.

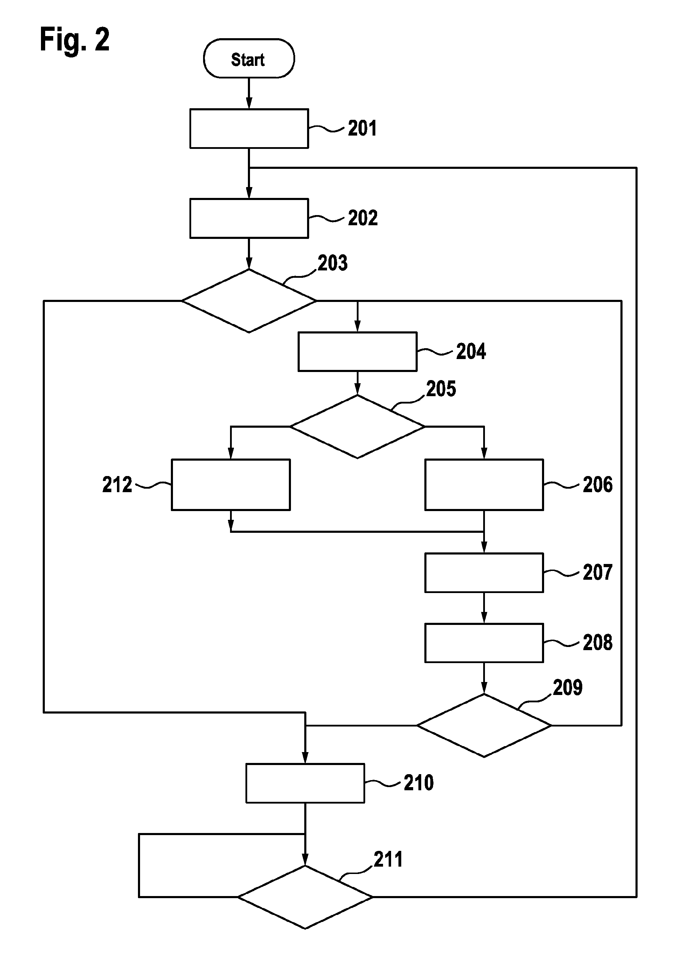

A method for enhancing presentations by making a digitized pointer available to a local audience as well as to a remote audience or a recorder is described below making reference to the flowchart of figure 2.

The method for example starts whenever the server 102 is turned on.

After the start a step 201 is executed.

In step 201 the system is calibrated. To that end the server 101 determines and outputs a calibration image previously stored on the server 101 in memory.

The calibration image indicates instructions for a user of the pointing device 110. These instructions ask the presenter to move the pointing device from the lower left corner of the screen 101 to the lower right corner of the screen 101 and afterwards from the lower left corner to the upper left corner of the screen 101. The order of the movement may vary; the axis connecting the two horizontal extremities of the screen 101 and two vertical extremities of the screen 101 are used to determine the maximum size to be covered by the pointing device. Pressing and holding the button 114 while moving between the extremities may be requested and monitored to determine the relevant data for calibration. For example, the angle between the two connecting lines from the pointing device 110 to the two extreme ends of the screen in question related to the position of the presenter are used to describe the size of the screen 101. As depicted in figure 1 the maximum angles are labeled MaxθH and MaxθV for the horizontal and the vertical extremities respectively.

This information is determined for example by the processor 107 from the position and orientation data received from the pointing device 110. The maximum angles are stored for further processing on the server 102. Step 201, i.e. the calibration, may be optional or replaced by the step or reading the calibration data from memory. After the calibration a step 202 is executed.

In step 202 an image is determined by the server 102 and sent to the display device 100 via the data output 103. The image is for example a first slide of a presentation. At the same time the image is sent to any connected clients via the network device 108. Optionally format conversion is performed before the image output. This means that an image of the presentation to be displayed on the screen 101 is sent to the display device 100 and via the network device 108. Afterwards a step 203 is executed.

In step 203 while the image that was sent in step 202 is displayed, information is received from the pointing device 110 about the alignment of the pointing device 110 relative to the screen 101 and about the state of the button 114. Furthermore according to the example a test is performed to determine whether the button 114 is pressed or not. For example from the information indicating the state of the button 114 it is determined if the button 114 is pressed or not. In case the button is pressed a step 204 is executed. Otherwise a step 209 is executed.

In step 204 a position and orientation of the pointing device 110 is determined. To that end, for example, the angular position and orientation of the pointing device 110 is determined as the horizontal angle θH and the vertical angle θV as depicted in figure 1. Movement of the pointing device is, for example, determined by calculating the ratio between θH and MaxθH and the ratio θV and MaxθV. This means that the position on the image the pointing device 110 is pointing at is determined from the alignment of the pointing device 110. Furthermore this means that the alignment is determined from a horizontal orientation angle ΘH and a vertical orientation angle ΘV of the pointing device 110 relative to the predetermined horizontal orientation MaxθH and vertical orientation MaxθV. Afterwards a step 205 is executed.

In the step 205 it is determined if a pre-determined action is evoked by the presenter. To that end, the position and orientation of the pointing device 110 as well as the movement is analysed to detect predetermined pattern indicating a pre-determined action. For example, based on pre-determined presenter preferences saved on the server 102, it is determined that an action has to be perform in case the pointer is pointing to pre-determined content displayed on the screen 101. Additionally or alternatively a time period of pointing at the same area or a change in the angles over time, e.g. forming a circle or a rectangular shape, may be used to determine whether to perform the action or not. A step 212 is executed when it is determined in that a pre-determined action has to be evoked. Otherwise a step 206 is executed.

In step 212, the predetermined action is performed. This means that the predetermined action to be performed depending on the information received is determined. In the following this is explained by exemplary cases.

In a first case for example, if the content underlying the area that is pointed to is a video, after a predetermined amount of time of pointing at a predetermined position on the image, the video can start playing. In this case the entire video may be displayed and as the result of the predetermined action the last image of the video is determined as result of the action. Alternatively, if the area underlying the predetermined position of the image displayed on the screen 101 contains another image, the action can be growing the size of the image according to the movement detected from monitoring the angles. In that case the result of the action is the resized image.

In a second case the action is to make a drawing on a slide shown in the image smoother or to fit it with the slide content by analyzing gradient information. In this case the result is the smoothened or fitted image.

In the third case, part of the screen 101 is highlighted depending on result of an analysis of the pointed area and the rest of the image on a screen 101. For example, as depicted in figure 1, a presentation slide is displayed in the image. Here the word highlighted is pointed at by the pointing device 110. In this case the result is the box around the word highlighted that is automatically identified as the area to highlight on the screen 101 by determining that the word highlighted is the only word displayed in this area of the screen 101.

Afterwards a step 207 is executed.

In step 206 a pointer image, for example a symbol representing the pointer like a red dot is determined for being displayed in the position that the pointer is pointing to. This means that the predetermined action to be performed depending on the information received is digitizing the pointer as pointer image. The result of the action is the pointer image. Optionally step 206 is determined in any case as soon as information that the button 114 is pressed is available. For example step 206 is executed before step 205 to help the presenter navigate on the image. Afterwards a step 207 is executed.

In step 207 the new image to be displayed is determined from the originally displayed image. The result of the action is integrated in the original image, used instead of it. For example the pointer is digitized, i.e. displayed using the pointer image determined in step 206 or the resized image is used instead of the original image. Afterwards, a step 208 is executed.

In step 208 the new image, i.e. the result of the action is sent to the display device 100 and via the network device 108 to be displayed. Afterwards a step 209 is executed.

In step 209 a test is performed whether the button 114 is pressed. This test includes determining whether the button is still pressed or not as described in step 203. In case the button 114 is pressed the step 204 is executed, otherwise a step 210 is executed.

In step 210 the original image without the result of the action or the pointing image is displayed. Afterwards a step 211 is executed.

In step 211 a test is performed if a next image shall be displayed or not. In case the next image shall be displayed step 202 is executed, otherwise step 211 is executed. To determine whether the next image shall be displayed or not the server 102 may follow a pre-determined set of images on a storyboard or a presentation depending on the time.

Alternatively or additionally the server 102 may monitor a user input indicating that a next image or a next slide of the presentation shall be displayed.

The method may be ended for example by monitoring the user input or when the last image of the images on a storyboard has been played.

Displaying of images in the steps described above means that the images are send from the server 102 to be displayed on the screen 101 and may mean that they are at the same time made available to remote audience, e.g. by sending the images via the network device 108 to client computers with displays by in the appropriate format.

Additionally or alternatively the data recorder may be connected to the server 102 or may be installed as part of the server 102 in order to store all new images together with the original images. For example, the recorded images can be saved with the presentation, e.g. as a sequence of images over time. This way, playback of the presentation can be provided with the same information about the pointing of the presenter than the original presentation.

The various parts of the methods described above may be performed on the server 102 or partially on the server 102 and partially on the pointing device 110. In particular the position and orientation, determination of the angles, θH, θV, MaxθH, MaxθV may be performed on the pointing device 110. In this case the processor 113 is adapted to evaluate the signals from the sensor 112 to determine the respective angles and to send the information about the angles to the server 102 via the output 111.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for making a presentation, **comprising**
- sending (202) an image of the presentation to be displayed on a screen (101), in particular to a display device (100) and via a network device (108),
- while the image is displayed, receiving (203, 204) from a pointing device (110) information about the alignment of the pointing device (110) relative to the screen (101),
- determining (205, 206, 212) a predetermined action to be performed depending on the information received, and
- sending (208) the result of the predetermined action, in particular to the display device (100) and via the network device (108).

2. The method according to claim 1, wherein a position on the image the pointing device (110) is pointing at is determined (204) from the alignment of the pointing device (110).

3. The method according to claim 1 or 2, wherein the alignment is determined (204) from a horizontal orientation angle (θH) and a vertical orientation angle (θV) of the pointing device (110) relative to a predetermined horizontal orientation (MaxθH) and vertical orientation (MaxθV).

4. The method according to claim 3, wherein the predetermined horizontal and vertical orientation is a maximum horizontal angle (MaxθH) and a maximum vertical angle (MaxθV) that correspond to the angle between the horizontal and vertical extremities of the screen (101) from the position of the pointing device (110) respectively.

5. The method according to claim 4, wherein the maximum horizontal and vertical angles (MaxθH, MaxθV) are determined from information received from the pointing device (110) while a calibration image is displayed on the screen (101).

6. The method according to any of the aforementioned claims, wherein the predetermined action is to determine (207) a new image.

7. The method according to claim 6 wherein the new image comprises of the image and a symbol representing the pointer displayed at the position the pointing device (110) is pointing at on the displayed image.

8. The method according to claim 6, wherein the new image comprises of the image and a highlighted area determined depending on the position the pointing device (110) is pointing at on the displayed image.

9. The method according to claim 6, wherein the new image is determined as at least a part of the image resized.

10. The method according to claim 1 to 5, wherein the action is to display a video.

11. A server (102) for making a presentation, **operable to**
- send (202) an image of the presentation to be displayed on a screen (101), in particular via an output device to a display device (100), and via a network device (108) to a client or a recorder,
- while the image is displayed, receive (203,204), in particular via a input device, from a pointing device (110) information about the alignment of the pointing device (110) relative to the screen (101),
- determine (205, 206, 212), in particular by a processor, a predetermined action to be performed depending on the information received,
- send (208) the result of the predetermined action, in particular via the output device to the display device (100) and via the network device (108) to the client or the recorder.

12. The server (102) according to claim 11, wherein the processor is adapted to determine (204) a position on the image the pointing device (110) is pointing at from the alignment of the pointing device (110).

13. The server (102) according to claim 11 or 12, wherein the alignment is determined (204) from a horizontal orientation angle (ΘH) and a vertical orientation angle (ΘV) of the pointing device (110) relative to a predetermined horizontal and vertical orientation.

14. The server (102) according to claims 11 to 13, wherein the predetermined action is to determine (207) a new image.

15. The server (102) according to claim 14 wherein the new image comprises of the image and a symbol representing the pointer displayed at the position the pointing device (110) is pointing at on the displayed image.

16. The server (102) according to claim 14, wherein the new image comprises of the image and a highlighted area determined depending on the position the pointing devise (110) is pointing at on the displayed image.

17. The server (102) according to claim 14, wherein the new image is determined as at least a part of the image resized.

18. The server (102) according to claim 11 to 14, wherein the action is to display a video.

## Amended claims

### Amended claims in accordance with Rule 137(2) EPC.

**1.** A method for making a presentation, **comprising**
- sending (202) by a server (102) an image of the presentation to be displayed on a screen (101) to a display device (100) and via a network device (108),
- while the image is displayed, receiving (203, 204) by the server (102) from a pointing device (110) information about the alignment of the pointing device (110) relative to the screen (101),
- determining (205, 206, 212) by the server (102) a predetermined action to be performed depending on the information received, and
- sending (208) by the server (102) the result of the predetermined action to the display device (100) and via the network device (108).

**2.** The method according to claim 1, wherein a position on the image the pointing device (110) is pointing at is determined (204) from the alignment of the pointing device (110).

**3.** The method according to claim 1 or 2, wherein the alignment is determined (204) from a horizontal orientation angle (θH) and a vertical orientation angle (θV) of the pointing device (110) relative to a predetermined horizontal orientation (MaxθH) and vertical orientation (MaxθV).

**4.** The method according to claim 3, wherein the predetermined horizontal and vertical orientation is a maximum horizontal angle (MaxθH) and a maximum vertical angle (MaxθV) that correspond to the angle between the horizontal and vertical extremities of the screen (101) from the position of the pointing device (110) respectively.

**5.** The method according to claim 4, wherein the maximum horizontal and vertical angles (MaxθH, MaxθV) are determined from information received from the pointing device (110) while a calibration image is displayed on the screen (101).

**6.** The method according to any of the aforementioned claims, wherein the predetermined action is to determine (207) a new image.

**7.** The method according to claim 6 wherein the new image comprises of the image and a symbol representing the pointer displayed at the position the pointing device (110) is pointing at on the displayed image.

**8.** The method according to claim 6, wherein the new image comprises of the image and a highlighted area determined depending on the position the pointing device (110) is pointing at on the displayed image.

**9.** The method according to claim 6, wherein the new image is determined as at least a part of the image resized.

**10.** The method according to claim 1 to 5, wherein the action is to display a video.

**11.** A server (102) for making a presentation, comprising a data output (103) connectable to a data input of a display device (100) and a network device (108) **operable to**
- send (202) an image of the presentation to be displayed on a screen (101) via the data output (103) to the display device (100), and via the network device (108) to a client or a recorder,
- while the image is displayed, receive (203,204), in particular via a input device, from a pointing device (110) information about the alignment of the pointing device (110) relative to the screen (101),
- determine (205, 206, 212), in particular by a processor, a predetermined action to be performed depending on the information received,
- send (208) the result of the predetermined action via the output device to the display device (100) and via the network device (108) to the client or the recorder.

**12.** The server (102) according to claim 11, wherein the processor is adapted to determine (204) a position on the image the pointing device (110) is pointing at from the alignment of the pointing device (110).

**13.** The server (102) according to claim 11 or 12, wherein the alignment is determined (204) from a horizontal orientation angle (ΘH) and a vertical orientation angle (ΘV) of the pointing device (110) relative to a predetermined horizontal and vertical orientation.

**14.** The server (102) according to claims 11 to 13, wherein the predetermined action is to determine (207) a new image.

**15.** The server (102) according to claim 14 wherein the new image comprises of the image and a symbol representing the pointer displayed at the position the pointing device (110) is pointing at on the displayed image.

**16.** The server (102) according to claim 14, wherein the new image comprises of the image and a highlighted area determined depending on the position the pointing device (110) is pointing at on the displayed image.

**17.** The server (102) according to claim 14, wherein the new image is determined as at least a part of the image resized.

**18.** The server (102) according to claim 11 to 14, wherein the action is to display a video.
